# FASCICULE DE BREVET EUROPEEN

(11) **EP 2 977 142 B1**
(45) Date de publication et mention de la délivrance du brevet: **30.11.2016**
(21) Numéro de dépôt: 15177408.0
(22) Date de dépôt: 17.07.2015
(51) Int. Cl.: B23P 6/00, B23P 19/02, B25B 27/06, B23D 77/00

(54) **PROCÉDÉ DE REMISE EN CONFORMITÉ DE JANTE ET OUTILLAGE POUR LA MISE EN OEUVRE DU PROCÉDÉ**
VERFAHREN ZUR ORDNUNGSGEMÄSSEN WIEDERINSTANDSETZUNG VON FELGEN, UND WERKZEUG FÜR DIE UMSETZUNG DIESES VERFAHRENS
METHOD FOR RESTORING THE CONFORMITY OF A RIM AND TOOL FOR IMPLEMENTING SAID METHOD

(30) Priorité: 23.07.2014 FR 1457111
(43) Date de publication de la demande: 27.01.2016
(73) Titulaire: Safran Landing Systems, 78140 Vélizy-Villacoublay (FR)
(72) Inventeur: SCHOENBOCK, Clément, 78140 VELIZY-VILLACOUBLAY (FR)
(74) Mandataire: Lavialle, Bruno François Stéphane

(56) Documents cités:
- EP-A2- 2 572 822
- JP-A- S59 102 524
- JP-A- 2000 334 612
- US-A- 1 403 754
- US-A- 3 802 055
- US-A- 4 080 705
- US-A- 4 724 608
- US-B1- 6 886 228

## Description

L'invention concerne le domaine général des procédés et outillages de remise en conformité d'une jante de roue.

### ARRIERE PLAN DE L'INVENTION

Les jantes de roues comportent des alésages qui servent à assembler des pièces de freinage de la roue pour transmettre, via ces alésages, un couple de freinage de roue.

Les freinages répétitifs entrainent une détérioration de la forme de ces alésages. Avant détérioration, ces alésages sont chacun cylindrique droit. Après détérioration ces alésages sont ovalisés. Cette ovalisation peut générer des jeux entre les pièces de freinage et la jante, des vibrations peuvent apparaitre et la sécurité lors du freinage peut être compromise.

Il est donc nécessaire de remettre en conformité la jante en réalésant ces alésages pour supprimer les ovalisations et permettre à nouveau un assemblage des pièces de freinage dans des alésages cylindriques droits.

Ces opérations d'alésages sont généralement réalisées en atelier à l'aide d'aléseuses volumineuses à bâtis fixes. Ce type de remise en conformité est couteux et nécessite du personnel qualifié pour positionner la jante sur l'aléseuse et commander l'aléseuse.

### OBJET DE L'INVENTION

Un objet de la présente invention est de fournir un procédé alternatif de remise en conformité d'une jante de roue comportant une pluralité d'alésages ovalisés, et un outillage alternatif pour la mise en oeuvre du procédé.

Le document US 4 080 705 divulgue un procédé de remise en conformité d'une jante de roue comportant une pluralité d'alésages ovalisés. Un outil d'alésage est connu du document JP S59 102524 A.

### RESUME DE L'INVENTION

A cette fin, il est proposé selon l'invention un procédé de remise en conformité d'une jante de roue comportant une pluralité d'alésages ovalisés, essentiellement caractérisé en ce qu'il comporte au moins une étape d'alésage d'un premier alésage ovalisé à l'aide d'un alésoir présentant des portions longitudinales de pilotage et de coupe, la portion de coupe présentant des dents qui définissent un diamètre de coupe et la portion de pilotage présentant un diamètre de pilotage strictement inférieur au diamètre de coupe, l'étape d'alésage de ce premier alésage ovalisé consistant à insérer l'alésoir dans ce premier alésage ovalisé en commençant par la portion de pilotage puis par la portion de coupe, le diamètre de pilotage étant tel qu'il permette un guidage en translation de l'alésoir à l'intérieur de ce premier alésage ovalisé à aléser.

L'opération d'alésage de chacun des alésages ovalisés et en particulier du premier alésage ovalisé est réalisée à l'aide de l'alésoir doté des portions de pilotage et de coupe. Lors de la coupe, cet alésoir s'auto positionne dans l'alésage grâce à la portion de pilotage qui se trouve en amont de la portion de coupe.

L'ovalisation de l'alésage peut être supprimée pour obtenir un alésage ayant une surface interne cylindrique droite de diamètre intérieur égal ou légèrement supérieur au diamètre de coupe. L'alésage ainsi réalésé présente une meilleure cylindricité et il est par conséquent considéré comme remis en conformité.

La portion de pilotage est agencée pour présenter un diamètre de pilotage apte à être inséré dans l'alésage cylindrique ovalisé pour guider le déplacement de l'alésoir dans cet alésage. Pour cela le diamètre de pilotage est inférieur ou égal au diamètre minimum de l'alésage ovalisé. Préférentiellement, le diamètre de pilotage est inférieur de 0.015 mm à +/- 0.05mm au diamètre minimum de l'alésage ovalisé.

L'alésoir guidé par sa portion de pilotage peut se déplacer en translation et en rotation le long de l'axe de symétrie de l'alésage sans nécessiter les moyens de guidage propres à une aléseuse à bâti fixe.

Le déplacement de l'alésoir par rapport à l'alésage ovalisé est rectiligne selon un axe de déplacement d'alésoir coaxial à l'alésage ovalisé et à l'axe principal de symétrie de l'alésoir.

Cette portion de pilotage fait de l'alésoir un outil portatif pouvant se centrer de lui-même dans l'alésage. Ainsi, on peut réaliser l'alésage sans avoir à utiliser une aléseuse à bâti fixe.

Dans un mode de réalisation préférentiel du procédé selon l'invention, l'alésoir s'étend selon un axe longitudinal de symétrie de l'alésoir et durant l'étape d'alésage, l'alésoir est assemblé à une machine d'entrainement à rotation de l'alésoir agencée pour entrainer l'alésoir à rotation selon cet axe longitudinal de symétrie de l'alésoir. Cette machine d'entraînement est portative manuellement.

Pour la compréhension de l'invention, le terme machine d'entraînement portative manuellement implique que la machine d'entrainement présente un poids inférieur à 25 kg, préférentiellement inférieur à 10Kg, ce qui permet à un opérateur de porter manuellement cette machine et l'alésoir assemblé avec la machine.

On note que la liaison entre la machine d'entrainement et l'alésoir peut être souple pour autoriser une rotation de la machine selon un axe de rotation non parallèle à l'axe de symétrie de l'alésoir. Ainsi, l'alésoir peut être désaxée par rapport à l'alésoir sans risque de l'endommager. Une telle liaison souple peut être une liaison par cardan.

Selon un autre mode de réalisation du procédé selon l'invention, préalablement à l'étape d'alésage du premier alésage ovalisé, on met en oeuvre une étape d'extraction d'une bague emmanchée dans ce premier alésage ovalisé, cette étape d'extraction étant mise en oeuvre à l'aide d'un outil d'extraction comportant une broche présentant une portion longitudinale de guidage adaptée à coulisser dans la bague et une portion d'appui conformée pour pouvoir venir en appui contre une extrémité axiale de la bague alors que la portion de guidage est positionnée à l'intérieur de cette bague. En réaction à un effort de compression de cette portion d'appui contre cette extrémité axiale de la bague, la portion d'appui exerce des efforts radiaux de compression de la bague orientés vers un axe de symétrie principal de cette bague.

L'axe de symétrie principal de la bague est l'axe de symétrie autour duquel s'étend la bague, cette bague étant une pièce de révolution annulaire formée autour de cet axe de symétrie principal.

En exerçant ces efforts radiaux, on s'oppose à un élargissement de la bague et on limite le risque d'endommager l'alésage lors de l'extraction de bague.

Selon un autre mode de réalisation du procédé selon l'invention, la portion longitudinale de guidage est cylindrique droite, la portion d'appui présente une surface tronconique coaxiale de la portion longitudinale de guidage, cette surface tronconique s'étend autour de cette portion longitudinale de guidage et cette surface tronconique est disposée pour définir une zone creuse annulaire entre la surface tronconique et la portion longitudinale de guidage qui est entourée par cette surface tronconique.

Grâce à cette surface tronconique dont la base conique est formée autour de la portion de guidage, lorsque l'on introduit la portion de guidage de broche dans la bague, et que l'on fait coulisser cette broche dans la bague, jusqu'à ce que la portion d'appui de la broche soit en contact contre l'extrémité axiale de la bague, alors on constate que la base de la surface tronconique vient en appui contre la bague selon une ligne de contact circulaire.

En déplaçant la broche pour forcer la portion d'appui contre la bague, la surface tronconique exerce des efforts radiaux partants de cette ligne de contact circulaire et orientés vers l'axe de symétrie de la bague.

Ainsi, la broche a tendance à limiter l'expansion de la bague dans l'alésage où elle est emmanchée.

Plus la portion d'appui de la broche est comprimée contre la bague et plus les efforts radiaux, exercés par la broche sont importants.

Le risque de dégradation de l'alésage par expansion de la bague au niveau de son extrémité axiale est ainsi limité. La broche permet ainsi l'extraction de bague en limitant la dégradation de l'alésage ovalisé, ce qui par la suite facilite le centrage de l'alésoir dans l'alésage.

Dans un mode de réalisation du procédé selon l'invention combiné au précédent mode, la bague est de forme cylindrique droite et présente un diamètre externe inférieur au diamètre de coupe défini par les dents de l'alésoir. L'étape d'alésage est réalisée de manière à aléser le premier alésage ovalisé pour lui conférer une forme interne cylindrique droite de diamètre égal au diamètre de coupe, puis après mise en oeuvre de l'étape d'alésage du premier alésage ovalisé, le procédé de remise en conformité comprend une étape d'emmanchement, dans chaque alésage alésé lors de l'étape d'alésage, d'une bague de remplacement correspondante.

Ainsi les alésages ovalisés de la jante sont remis en formes cylindriques et des bagues de remplacement sont placées dans ces alésages remis en conformité. La jante ainsi remise en conformité ne présente plus de jeux entre alésages et bagues et elle peut à nouveau être utilisée.

Selon un autre aspect, l'invention concerne un outillage pour la mise en oeuvre du procédé selon l'invention.

Plus particulièrement l'outillage selon l'invention est essentiellement caractérisé en ce qu'il comporte :
- un outil d'alésage comportant un alésoir s'étendant selon un axe longitudinal de symétrie de l'alésoir et présentant successivement, une portion longitudinale de pilotage, une portion longitudinale de coupe et une portion longitudinale d'entrainement à rotation de l'alésoir, la portion de coupe présentant des dents qui définissent un diamètre de coupe et la portion de pilotage s'étendant le long d'une surface cylindrique droite définissant un diamètre de pilotage strictement inférieur au diamètre de coupe ;
- un outil d'extraction de bague emmanchée dans un alésage, cet outil d'extraction comportant une broche présentant une portion longitudinale de guidage adaptée à coulisser dans une bague cylindrique droite à extraire et une portion d'appui conformée pour que lorsque la portion longitudinale de guidage est positionnée à l'intérieur de cette bague et que la portion d'appui est en appui contre une extrémité axiale de la bague, alors cette portion d'appui, en réaction à un effort de compression de cette portion d'appui contre cette extrémité axiale de la bague, exerce des efforts radiaux de compression de la bague orientés vers un axe de symétrie principal de cette bague.

Cet outillage permet à la fois l'extraction de bague limitant l'endommagement de l'alésage et le réalésage à l'aide d'outil d'entrainement portatifs. Les opérations d'alésage et d'extraction de bague peuvent être réalisées avec un outillage portatif manuellement, sans avoir à fixer la jante sur une aléseuse présentant une colonne de guidage de tête d'alésage et sans avoir à assembler la jante sur une presse hydraulique.

On facilite ainsi ces opérations d'alésage et extraction de bague tout en limitant les coûts de ces opérations.

Dans un mode de réalisation préférentiel de l'outillage selon l'invention :
- l'outil d'alésage comporte une machine d'entrainement à rotation de l'alésoir assemblée à l'alésoir, via la portion longitudinale d'entrainement à rotation de l'alésoir, cette machine d'entrainement à rotation permettant d'entrainer à rotation l'alésoir selon son axe longitudinal de symétrie de l'alésoir, cette machine d'entraînement étant portative manuellement ; et
- l'outil d'extraction de bague comporte une machine d'entrainement en translation de la broche assemblée à la broche pour l'entrainer en translation selon un axe longitudinal de symétrie de la broche, cette machine d'entraînement en translation étant également portative manuellement.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:
- La figure 1 présente une demi-jante d'aéronef par rapport à laquelle sont positionnés un outillage selon l'invention pour extraire des bagues emmanchées dans des alésages ovalisés de la jante et pour réaléser ces alésages ovalisés ;
- La figure 2 présente une vue en coupe transversale partielle de la jante selon la figure 1 alors que l'outil d'extraction de bague selon l'invention est utilisé pour extraire une bague d'un alésage ovalisé ;

- La figure 2A est une vue de détail de la figure 2 illustrant un cône appartenant à l'outil d'extraction de bague et adapté à l'écartement d'une extrémité de l'alésage par laquelle doit être extraite la bague ;
- La figure 2B représente une vue détaillée de la figure 2A lors d'application d'un effort d'extraction de la bague ;

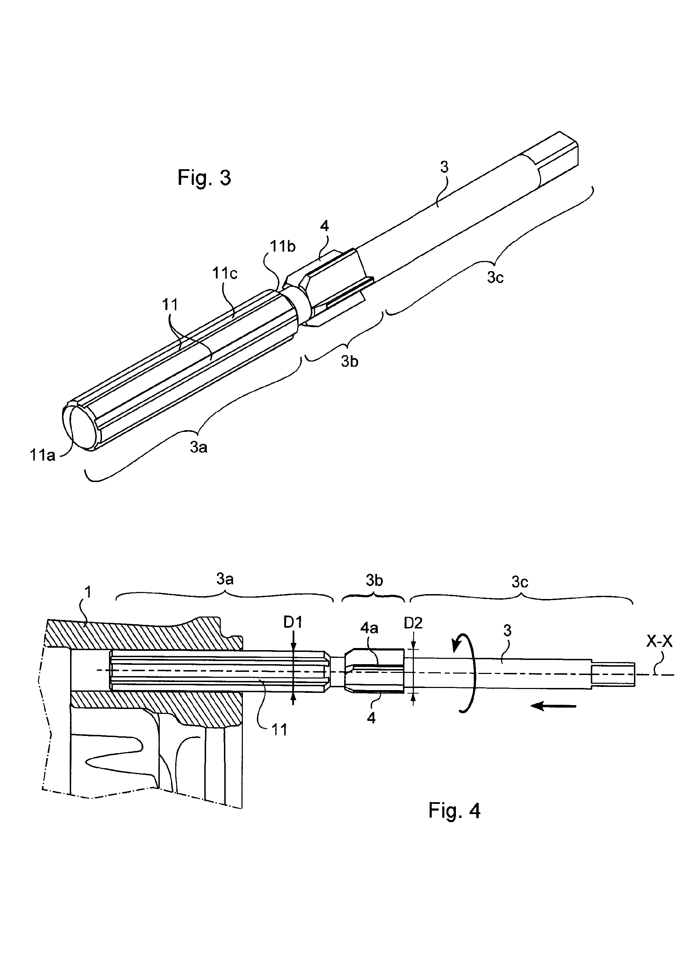

- La figure 3 est une vue en perspective de l'alésoir selon l'invention ;
- La figure 4 est une vue en coupe partielle de la demi-jante de la figure 1 alors que l'on introduit l'alésoir dans un alésage pour en supprimer l'ovalisation.

### DESCRIPTION DETAILLEE DE L'INVENTION

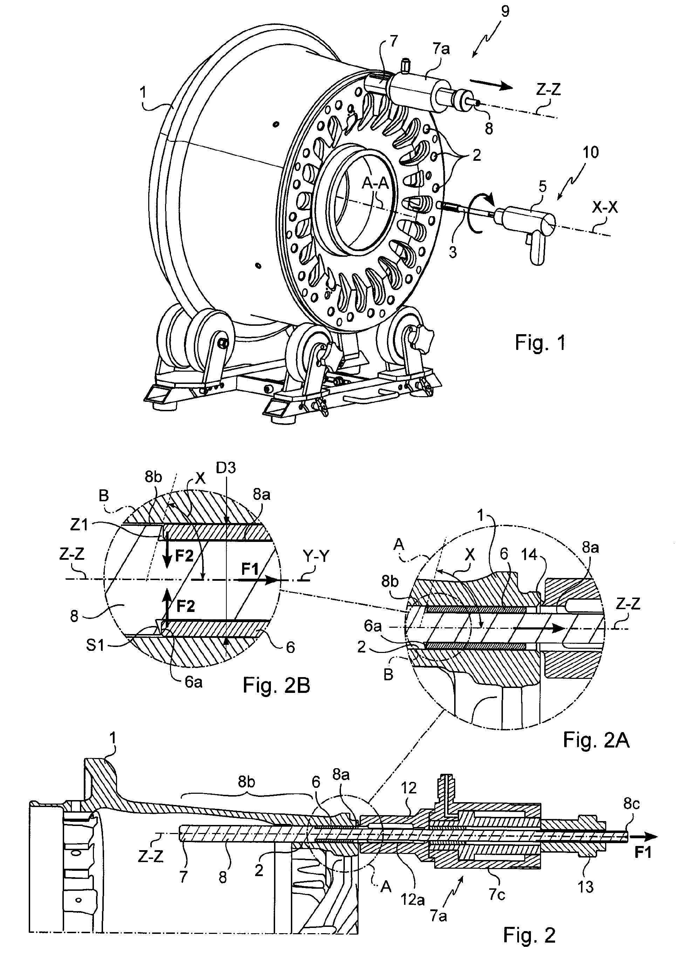

Le procédé de remise en conformité selon l'invention est ici appliqué à la remise en conformité d'une jante 1 de roue d'atterrisseur d'aéronef. La jante d'aéronef 1 et composée de deux parties de jantes qui sont chacune annulaire et qui s'étendent selon un axe de révolution de jante A-A. La figure 1 présente une demi-jante 1 d'aéronef comportant plusieurs alésages 2 qui s'étendent parallèlement à l'axe de révolution A-A de la demi-jante 1. La jante 1 est montée à rotation sur un montage d'usinage, selon un axe de rotation sensiblement horizontal pour faciliter la mise à hauteur des alésages 2 vis-à-vis de l'opérateur.

Ces alésages 2 sont prévus pour permettre l'assemblage avec la jante ou la demi-jante 1 de moyens de freinage pour transmettre un couple de freinage de la roue. A force de freinages répétés et compte tenu des efforts importants transmis via ces alésages 2, on constate une déformation interne des alésages 2 et une tendance à l'ovalisation des alésages 2. Un alésage 2 ainsi déformé est non cylindrique et est nommé alésage ovalisé. Chaque alésage ovalisé génère un défaut d'ajustement et un jeu entre les pièces de freinage qu'il reçoit et la jante 1. Des vibrations et des risques de fatigue prématurée de pièces de l'atterrisseur d'aéronef peuvent en découler.

Pour des raisons économiques, plutôt que de rebuter systématiquement des jantes présentant des alésages ovalisés, on préfère les remettre en conformité. Au cours de sa vie, une même jante 1 peut subir plusieurs remises en conformité.

La remise en conformité d'une jante comprend le réalésage des alésages ovalisés 2 et si la jante a déjà été remise en conformité, l'extraction des bagues emmanchées dans chacun des alésages précédemment réalésés.

Dans tous les cas, après réalésage, on est obligé d'emmancher une nouvelle bague de remplacement dans l'alésage réalésé. Une telle bague de remplacement (non représentée) comporte une forme interne creuse, cylindrique droite ayant un diamètre interne sensiblement identique au diamètre interne d'origine de l'alésage, c'est-à-dire le diamètre qu'avait l'alésage avant la première utilisation de la jante. Chaque bague de remplacement présente une forme extérieure cylindrique droite de diamètre externe égal au diamètre interne de l'alésage réalésé plus ou moins une tolérance nécessaire à un montage serré de la bague de remplacement dans l'alésage réalésé.

On note que les mêmes étapes d'extraction de bague, d'alésage, et d'emmanchement d'une bague de remplacement sont réalisées pour chacun des alésages ovalisés de la jante.

De manière plus détaillée, selon un premier aspect, l'invention porte sur un procédé de remise en conformité d'une jante 1 comportant au moins une étape d'alésage de chacun des alésage ovalisé 2 de la jante, à l'aide d'un alésoir 3 présentant des portions longitudinales de pilotage 3a et de coupe 3b. La portion de coupe 3b présente des dents 4 qui définissent un diamètre de coupe D2 et la portion de pilotage 3a présente un diamètre de pilotage D1 strictement inférieur au diamètre de coupe D2. Cette étape d'alésage consiste, pour chaque alésage ovalisé, à insérer l'alésoir 3 dans l'alésage ovalisé 2 en commençant par la portion de pilotage 3a puis par la portion de coupe 3b. Ce diamètre de pilotage D1 est prévu pour guider l'alésoir 3 en translation dans alésage ovalisé 2 à aléser. Une machine, portative manuellement, d'entrainement à rotation 5 de l'alésoir 3 est assemblée à l'alésoir pour l'entraîner à rotation selon un axe longitudinal de symétrie X-X selon lequel s'étend l'alésoir 3.

Dans le cas où l'alésage ovalisé contient déjà une bague interne, préalablement à l'étape d'alésage on réalise, une étape d'extraction de la bague 6 emmanchée dans l'alésage ovalisé 2. Cette étape d'extraction est mise en oeuvre à l'aide d'un outil d'extraction 7 comportant une broche 8 présentant une portion longitudinale de guidage 8a qui est adaptée à coulisser dans la bague 6. Cette broche 8 présente aussi une portion d'appui 8b conformée pour pouvoir venir en appui contre une extrémité axiale 6a de la bague 6 alors que la portion de guidage 8a est coulisse à l'intérieur de la bague 6.

Pour cela, la portion longitudinale de guidage 8a est cylindrique droite et la portion d'appui 8b présente une surface tronconique SI coaxiale de la portion longitudinale de guidage 8a. Cette surface tronconique SI s'étend autour de la portion longitudinale de guidage 8a et est disposée pour définir une zone creuse annulaire Z1 entre la surface tronconique SI et la portion longitudinale de guidage 8a entourée par cette surface tronconique SI. La surface tronconique SI est déterminée par un angle X de 86° entre l'axe de révolution / symétrie X-X de l'alésoir 3 et la surface SI. Le détail de cette surface SI est visible aux figures 2A et 2B. Idéalement, l'extrémité de la bague 6 à extraire présente un chanfrein conique externe contre lequel la surface SI vient buter. Ainsi des efforts radiaux concentriques F2 sont générés lors de l'extraction. Ces efforts F2 limitent l'expansion de la bague et réduisent le risque d'arracher de la matière dans l'alésage 2. Comme on le voit sur la figure 2B, la zone Z1 creuse est en partie conservée entre la bague 6 et la portion d'appui SI. Ceci favorise un contact axial conique entre la portion d'appui et la bague.

Ainsi, en réaction à un effort de compression F1 de la portion d'appui 8b contre l'extrémité axiale 6a de la bague, la portion d'appui 8b exerce des efforts radiaux F2 de compression de la bague orientés vers l'axe de symétrie principal Y-Y de cette bague 6 de forme cylindrique droite.

Le diamètre externe D3 de la bague 6 est inférieur au diamètre de coupe D2 de l'alésoir afin que lors de l'entrainement à rotation de l'alésoir selon l'axe X-X, on confère à chacun des alésages ovalisés, une forme interne cylindrique droite de diamètre égal au diamètre de coupe D2.

Il va maintenant être décrit en détail l'outillage 9 selon l'invention qui permet de mettre en oeuvre du procédé de l'invention.

L'outillage 9 comporte un outil d'alésage 10 et un outil d'extraction 7 de bague 6 emmanchée dans un alésage 2.

L'outil d'alésage 10 comporte l'alésoir 3 qui présente successivement, sa portion longitudinale de pilotage 3a, sa portion longitudinale de coupe 3b et sa portion longitudinale d'entrainement à rotation 3c. La portion de pilotage 3a s'étend le long d'une surface cylindrique droite définissant le diamètre de pilotage D1. La portion longitudinale de coupe 3b est placée entre la portion longitudinale de pilotage 3a et la portion longitudinale d'entrainement à rotation 3c.

Ainsi, l'alésoir 3 permet de positionner la machine d'entrainement à rotation 5 par rapport à l'alésage 2.

Pour cela, la portion longitudinale de pilotage 3a présente une longueur de centrage au moins égale à cinq fois le diamètre de pilotage D1 (ce diamètre de pilotage D1 est le diamètre extérieur maximum de la portion longitudinale de pilotage).

La portion longitudinale de pilotage 3a présente des rainures 11 parallèles entre elles, chacune présentant un côté latéral 11c et des extrémités terminales 11a, 11b qui débouchent respectivement vers l'extérieur de l'alésoir 3. Les rainures 11 sont parallèles à axe longitudinal de symétrie de l'alésoir X-X et permettent de racler l'intérieur de l'alésage pour y arracher d'éventuels déchets. Ces déchets sont évacués par ces rainures longitudinales 11 avant de réaliser la coupe. Ceci limite :
- le risque de coincement de l'alésoir 3 à l'intérieur de l'alésage 2 ;
- l'usure de la portion de coupe 3b; et
- favorise le centrage de l'alésoir dans l'alésage ovalisé.

Pour faciliter la pénétration et le centrage de la portion de coupe vis-à-vis de l'alésage, cette portion présente un profil d'entrée des dents chanfreiné.

Les dents 4 de l'alésoir 3 qui définissent le diamètre de coupe D2 sont typiquement au nombre de 4 dents et sont réparties régulièrement autour de l'axe longitudinal de symétrie de l'alésoir 3. L'une des dents 4a est non coupante et est située en retrait par rapport au diamètre de coupe D1 défini par les autres dents 4 de l'alésoir. Le retrait est typiquement de 0,15 mm à +/-0,05 mm par rapport au diamètre de coupe.

Grâce à la caractéristique de retrait, la dent 4a non coupante crée une butée s'opposant à l'avancée trop rapide de l'alésoir dans l'alésage. Ceci permet d'avoir une vitesse d'avance sensiblement constante, indépendamment de la force de poussée appliquée sur l'alésoir. Ceci permet d'appliquer l'effort de poussée par la seule force de l'opérateur, sans utiliser de moyen mécanique externe de régulation d'avance).

L'usage de dents 4 hélicoïdales combiné à la dent 4a permet à l'alésoir 3 mis en rotation, selon son axe X-X, de s'enfoncer de lui-même dans l'alésage tout en limitant la vitesse d'avance. L'avancée de l'alésoir est autorégulée ce qui facilite l'usage de l'alésoir par un opérateur faiblement qualifié.

Comme illustré à la figure 1, l'outil d'extraction 7 comporte la broche 8 et une machine d'entrainement 7a en translation de la broche 8, par rapport à la jante 1, selon un axe Z-Z longitudinal de symétrie de la broche 8.

Comme on le voit sur la figure 2, cette machine 7a comporte un vérin hydraulique creux 7c, sur toute sa longueur pour permettre le passage de la broche 8 au travers du vérin 7c. La broche 8 permet le positionnement / la localisation du vérin 7c par rapport à l'alésage 2 où se trouve la bague 6 à extraire.

Ainsi, la broche 8 permet le guidage de la machine d'entrainement 7 par rapport à la bague à extraire ce qui facilite l'extraction sans nécessiter de presse hydraulique à bâti fixe. La portion longitudinale de guidage 8a de broche 8 est disposée entre la portion d'appui 8b et l'extrémité 8c de la broche qui est reliée au vérin via un écrou 13.

Ainsi, la broche 8 traverse la bague 6 et présente sa portion longitudinale de guidage 8a placée dans la bague 6, sa portion d'appui 8b placée d'un côté de la bague et la machine d'entrainement 7 placée de l'autre côté de la bague 6 pour exercer l'effort de traction F1.

La machine d'entrainement 7 présente aussi une pièce d'appui annulaire 12 s'étendant autour de la broche 8 et présentant un passage interne 12a adapté à recevoir la bague 6. Cette pièce d'appui annulaire 12 présente à l'une de ses extrémités axiales un cône 14 pour venir en contact contre la jante 2 et autour de l'alésage 2, à l'endroit d'un chanfrein annulaire formé à la sortie de l'alésage. Ce cône 14 est conformé pour écarter l'extrémité chanfreinée de l'alésage 2 lorsqu'il est forcé contre ce chanfrein. Ceci permet de limiter le risque d'arrachage de matière lors de l'extraction de bague.

On note que grâce à l'outillage portatif selon l'invention et au procédé selon l'invention, on peut se passer de machines à bâtis fixes, non portatives, telles qu'une aléseuse ou une presse hydraulique.

L'utilisation de l'outillage 9 se fait comme suit :
A) Dans un premier temps, la broche 8 est insérée l'alésage 2 depuis un côté de la jante 1 (depuis un côté creux de la jante), via son extrémité filetée 8c jusqu'à ce que cette extrémité filetée 8c soit passée au travers de la jante ;
B) Dans un second temps, on enfile sur la broche 8 :
   - d'abord la pièce d'appui annulaire 12 pour que sa portion conique 14 puisse venir en appui contre le chanfrein conique interne de l'alésage 2 ; puis
   - le vérin creux 7c pour qu'il vienne en appui contre la pièce 12 tout en entourant la portion de guidage 8a ; puis
   - on visse l'écrou 13 sur l'extrémité filetée 8c ;
C) Dans un troisième temps, on alimente le vérin hydraulique pour générer la force F1 d'extraction de bague. D'un côté la bague est comprimée de manière concentrique et de l'autre l'alésage 2 est écarté par le cône 14. La bague est ainsi extraite de l'alésage en limitant le risque de l'endommager.

Après extraction des bagues, on réalèse chacun des alésages 2 avec l'alésoir 3 puis on emmanche les bagues de remplacement dans chacun des alésages réalésés. La jante est alors considérée comme remise en conformité.

L'invention n'est pas limitée aux exemples décrits précédemment et peut comporter, dans le cadre des revendications, d'autres modes de réalisation non décrits. En particulier, bien que l'invention porte sur un outillage 9 combinant un outil d'alésage 10 et un outil d'extraction 7, l'invention peut aussi porter sur l'alésoir 3 seul ou sur l'outil d'extraction 7 seul.

## Revendications

1. Procédé de remise en conformité d'une jante (1) de roue comportant une pluralité d'alésages ovalisés (2), **caractérisé en ce qu'**il comporte au moins une étape d'alésage d'un premier alésage ovalisé (2) à l'aide d'un alésoir (3) présentant des portions longitudinales de pilotage (3a) et de coupe (3b), la portion de coupe (3b) présentant des dents (4) définissant un diamètre de coupe (D2) et la portion de pilotage (3a) présentant un diamètre de pilotage (D1) strictement inférieur au diamètre de coupe (D2), l'étape d'alésage de ce premier alésage ovalisé (2) consistant à insérer l'alésoir (3) dans ce premier alésage ovalisé (2) en commençant par la portion de pilotage (3a) puis par la portion de coupe (3b), le diamètre de pilotage (D1) étant tel qu'il permette un guidage en translation de l'alésoir (3) à l'intérieur de ce premier alésage ovalisé (2) à aléser.

2. Procédé de remise en conformité selon la revendication 1, dans lequel l'alésoir (3) s'étend selon un axe longitudinal de symétrie (X-X) de l'alésoir et durant l'étape d'alésage, l'alésoir (3) est assemblé à une machine d'entrainement à rotation (5) de l'alésoir agencée pour entrainer l'alésoir (3) à rotation selon cet axe longitudinal de symétrie (X-X) de l'alésoir, cette machine d'entraînement (5) étant portative manuellement.

3. Procédé de remise en conformité d'une jante conforme à l'une au moins des revendications 1 ou 2, comprenant, préalablement à l'étape d'alésage du premier alésage ovalisé (2), une étape d'extraction d'une bague (6) emmanchée dans ce premier alésage ovalisé (2), cette étape d'extraction étant mise en oeuvre à l'aide d'un outil d'extraction (7) comportant une broche (8) présentant une portion longitudinale de guidage (8a) adaptée à coulisser dans la bague (6) et une portion d'appui (8b) conformée pour pouvoir venir en appui contre une extrémité axiale (6a) de la bague (6) alors que la portion de guidage (8a) est positionnée à l'intérieur de cette bague (6) et pour qu'en réaction à un effort de compression (F1) de cette portion d'appui (8b) contre cette extrémité axiale (6a) de la bague, la portion d'appui (8b) exerce des efforts radiaux (F2) de compression de la bague orientés vers un axe de symétrie principal (Y-Y) de cette bague (6).

4. Procédé selon la revendication 3, la portion longitudinale de guidage (8a) est cylindrique droite, la portion d'appui (8b) présente une surface tronconique (S1) coaxiale de la portion longitudinale de guidage (8a), cette surface tronconique (S1) s'étend autour de cette portion longitudinale de guidage (8a), cette surface tronconique (S1) étant disposée pour définir une zone creuse annulaire (Z1) entre la surface tronconique (S1) et la portion longitudinale de guidage (8a) qui est entourée par cette surface tronconique (S1).

5. Procédé de remise en conformité d'une jante selon l'une quelconque des revendications précédentes combinée à la revendication 3 et dans lequel la bague (6) est de forme cylindrique droite et présente un diamètre externe (D3) inférieur au diamètre de coupe (D2) défini par les dents (4) de l'alésoir, l'étape d'alésage étant réalisée de manière à aléser le premier alésage ovalisé (2) pour lui conférer une forme interne cylindrique droite de diamètre égal au diamètre de coupe (D2), puis après mise en oeuvre de l'étape d'alésage du premier alésage ovalisé (2), le procédé de remise en conformité comprenant une étape d'emmanchement, dans chaque alésage alésé (2) lors de l'étape d'alésage, d'une bague de remplacement correspondante.

6. Outillage (9) pour la mise en oeuvre du procédé selon l'une quelconque des revendications précédentes combinée à la revendication 3, **caractérisé en ce qu'**il comporte :
- un outil d'alésage (10) comportant un alésoir (3) s'étendant selon un axe longitudinal de symétrie (X-X) de l'alésoir et présentant successivement, une portion longitudinale de pilotage (3a), une portion longitudinale de coupe (3b) et une portion longitudinale d'entrainement à rotation (3c) de l'alésoir (3), la portion de coupe présentant des dents (4) qui définissent un diamètre de coupe (D2) et la portion de pilotage (3a) s'étendant le long d'une surface cylindrique droite définissant un diamètre de pilotage (D1) strictement inférieur au diamètre de coupe (D2) ;
- un outil d'extraction (7) de bague (6) emmanchée dans un alésage (2), cet outil d'extraction (7) comportant une broche (8) présentant une portion longitudinale de guidage (8a) adaptée à coulisser dans une bague (6) cylindrique droite à extraire et une portion d'appui (8b) conformée pour que lorsque la portion longitudinale de guidage (8a) est positionnée à l'intérieur de cette bague (6) et que la portion d'appui (8b) est en appui contre une extrémité axiale (6a) de la bague (6), alors cette portion d'appui (8b), en réaction à un effort de compression (F1) de cette portion d'appui (8b) contre cette extrémité axiale (6a) de la bague (6), exerce des efforts radiaux (F2) de compression de la bague (6) orientés vers un axe de symétrie principal (Y-Y) de cette bague (6).

7. Outillage (9) selon la revendication 6, dans lequel, lequel :
- l'outil d'alésage (10) comporte une machine d'entrainement à rotation (5) de l'alésoir (3) assemblée de manière amovible à l'alésoir (3), via la portion longitudinale d'entrainement à rotation (3c), pour l'entrainer à rotation selon l'axe longitudinal de symétrie (Z-Z) de l'alésoir (3), cette machine d'entraînement (5) étant portative manuellement ; et
- l'outil d'extraction de bague (7) comporte une machine d'entrainement en translation (7a) de la broche (8) assemblée à la broche pour l'entrainer en translation selon un axe longitudinal de symétrie de la broche (Z-Z), cette machine d'entraînement en translation (7a) étant portative manuellement.

8. Outillage (9) selon la revendication 7, dans lequel :
- pour ce qui concerne l'outil d'alésage (10), la portion longitudinale de coupe (3b) est placée entre la portion longitudinale de pilotage (3a) et la portion longitudinale d'entrainement à rotation (3c) de l'alésoir (3) ; et
- pour ce qui concerne l'outil d'extraction (7), la machine d'entrainement en translation (7a) de la broche (8) comporte un vérin hydraulique (7c) creux sur toute sa longueur pour permettre le passage de la broche (8) au travers du vérin (7c), la broche permettant ainsi le positionnement du vérin (7c) par rapport à la broche (8) et par conséquent par rapport à l'alésage (2) contenant la bague à extraire (6) et dans laquelle s'étend la broche (8) de l'outil d'extraction (7).

9. Outillage (9) selon l'une quelconque des revendications 6 à 8, dans lequel la portion longitudinale de pilotage (3a) présente des rainures (11) parallèles entre elles, chacune de ces rainures (11) présente un côté latéral de rainure (11c) et des extrémités terminales de rainure (11a, 11b) qui débouchent vers l'extérieur de l'alésoir (3).

10. Outillage (9) selon l'une quelconque des revendications 6 à 9, dans lequel la portion longitudinale de pilotage présente une longueur de centrage au moins égale à cinq fois le diamètre de pilotage.

11. Outillage (9) selon l'une quelconque des revendications 6 à 10 combinées à la revendication 7, dans lequel la portion longitudinale de guidage (8a) de broche (8) est disposée entre la portion d'appui (8b) et une extrémité de la broche (8c) qui est reliée à la machine d'entrainement en translation (7a) de la broche pour forcer la translation de la broche (8).

12. Outillage selon la revendication 11, dans lequel la machine d'entrainement en translation (7a) de la broche (8) présente une pièce d'appui annulaire (12) s'étendant autour de la broche (8) et présentant un passage interne (12a) adapté à recevoir la bague (6) dans laquelle s'étend la portion longitudinale de guidage (8b) de la broche (8).

13. Outillage selon l'une quelconque des revendications 6 à 12, dans lequel les dents (4) de l'alésoir sont réparties régulièrement autour de l'axe longitudinal de symétrie (X-X) de l'alésoir, l'une de ces dents (4a) est non coupante et située en retrait par rapport au diamètre de coupe (D2) défini par les autres dents (4) de l'alésoir (3).

14. Outillage (9) selon la revendication 13, dans lequel les dents (4) de l'alésoir sont hélicoïdales.

## Patentansprüche

1. Verfahren zur ordnungsgemäßen Instandsetzung einer Radfelge (1), die eine Vielzahl von unrunden Bohrungen (2) umfasst, **dadurch gekennzeichnet, dass** es mindestens einen Bohrschritt zum Ausbohren einer ersten unrunden Bohrung (2) mittels einer Reibahle (3) umfasst, die Längsabschnitte zum Steuern (3a) und Schneiden (3b) aufweist, wobei der Schneidabschnitt (3b) Zähne (4) aufweist, die einen Schneiddurchmesser (D2) definieren, und der Steuerungsabschnitt (3a) einen Steuerungsdurchmesser (D1) aufweist, der strikt kleiner als der Schneiddurchmesser (D2) ist, wobei der Bohrschritt zum Ausbohren dieser ersten unrunden Bohrung (2) darin besteht, die Reibahle (3) in diese erste unrunde Bohrung (2) einzuführen, indem man mit dem Steuerungsabschnitt (3a) beginnt und dann der Schneidabschnitt (3b) folgt, wobei der Steuerungsdurchmesser (D1) derart ist, dass er eine Führung der Reibahle (3) in Translation im Inneren dieser auszubohrenden ersten unrunden Bohrung (2) ermöglicht.

2. Verfahren zur ordnungsgemäßen Instandsetzung nach Anspruch 1, wobei sich die Reibahle (3) gemäß einer Längssymmetrieachse (X-X) der Reibahle erstreckt und die Reibahle (3) während des Bohrschrittes an einer Drehantriebsmaschine (5) zum Drehantrieb der Reibahle montiert wird, die so ausgebildet ist, dass sie die Reibahle (3) entlang dieser Längssymmetrieachse (X-X) der Reibahle in Drehung antreibt, wobei diese Antriebsmaschine (5) von Hand tragbar ist.

3. Verfahren zur ordnungsgemäßen Instandsetzung einer Felge gemäß mindestens einem der Ansprüche 1 oder 2, umfassend vor dem Bohrschritt zum Ausbohren der ersten unrunden Bohrung (2) einen Extraktionsschritt zum Herausziehen eines in diese erste unrunde Bohrung (2) eingesetzten Ringes (6), wobei dieser Extraktionsschritt mittels eines Extraktionswerkzeugs (7) umgesetzt wird, das eine Spindel (8) umfasst, die einen Führungslängsabschnitt (8a) aufweist, der dazu geeignet ist, in dem Ring (6) zu gleiten, sowie einen Anlageabschnitt (8b), der so angepasst ist, dass er an einem axialen Ende (6a) des Ringes (6) zur Anlage kommen kann, während der Führungsabschnitt (8a) im Inneren dieses Ringes (6) positioniert ist, und damit der Anlageabschnitt (8b) in Antwort auf eine Kompressionskraft (F1) zum Drücken dieses Anlageabschnitts (8b) gegen dieses axiale Ende (6a) des Ringes radiale Kompressionskräfte (F2) zur Kompression des Ringes ausübt, die auf eine Hauptsymmetrieachse (Y-Y) dieses Ringes (6) gerichtet sind.

4. Verfahren nach Anspruch 3, wobei der Führungslängsabschnitt (8a) gerade zylindrisch ist, wobei der Anlageabschnitt (8b) eine kegelstumpfförmige Fläche (S1) aufweist, die koaxial zum Führungslängsabschnitt (8a) ist, wobei sich diese kegelstumpfförmige Fläche (S1) um diesen Führungslängsabschnitt (8a) herum erstreckt, wobei diese kegelstumpfförmige Fläche (S1) so angeordnet ist, dass sie eine ringförmige hohle Zone (Z1) zwischen der kegelstumpfförmigen Fläche (S1) und dem Führungslängsabschnitt (8a) definiert, die von dieser kegelstumpfförmigen Fläche (S1) umgeben ist.

5. Verfahren zur ordnungsgemäßen Instandsetzung einer Felge nach einem der vorhergehenden Ansprüche in Kombination mit Anspruch 3, und wobei der Ring (6) eine gerade zylindrische Form hat und einen Außendurchmesser (D3) aufweist, der kleiner als der Schneiddurchmesser (D2) ist, der von den Zähnen (4) der Reibahle definiert wird, wobei der Bohrschritt derart umgesetzt wird, dass die erste unrunde Bohrung (2) ausgebohrt wird, um ihr eine gerade zylindrische innere Form mit einem Durchmesser zu verleihen, der gleich dem Schneiddurchmesser (D2) ist, und dann nach dem Durchführen des Bohrschrittes zum Ausbohren der ersten unrunden Bohrung (2) das Verfahren zur ordnungsgemäßen Instandsetzung einen Einsetzschritt zum Einsetzen eines entsprechenden Ersatzringes in jede während des Bohrschrittes ausgebohrte Bohrung (2) umfasst.

6. Werkzeug (9) zum Durchführen des Verfahrens nach einem der vorhergehenden Ansprüche in Kombination mit Anspruch 3, **dadurch gekennzeichnet, dass** es umfasst:
- ein Bohrwerkzeug (10), das eine Reibahle (3) umfasst, die sich entlang einer Längssymmetrieachse (X-X) der Reibahle erstreckt und nacheinander einen Steuerungslängsabschnitt (3a), einen Schneidlängsabschnitt (3b) und einen Drehantriebslängsabschnitt (3c) der Reibahle (3) aufweist, wobei der Schneidabschnitt Zähne (4) aufweist, die einen Schneiddurchmesser (D2) definieren, und sich der Steuerungsabschnitt (3a) entlang einer geraden zylindrischen Fläche erstreckt, die einen Steuerungsdurchmesser (D1) definiert, der strikt kleiner als der Schneiddurchmesser (D2) ist;
- ein Extraktionswerkzeug (7) zum Herausziehen des Ringes (6), der in eine Bohrung (2) eingesetzt ist, wobei dieses Extraktionswerkzeug (7) eine Spindel (8) umfasst, die einen Führungslängsabschnitt (8a) aufweist, der dazu geeignet ist, in einem herauszuziehenden geraden zylindrischen Ring (6) zu gleiten, sowie einen Anlageabschnitt (8b), der angepasst ist, damit dieser Anlageabschnitt (8b), wenn der Führungslängsabschnitt (8a) im Inneren dieses Ringes (6) positioniert ist und der Anlageabschnitt (8b) in Anlage an einem axialen Ende (6a) des Ringes (6) ist, dann in Antwort auf eine Kompressionskraft (F1) zum Drücken dieses Anlageabschnittes (8b) gegen dieses axiale Ende (6a) des Ringes (6) radiale Kompressionskräfte (F2) zur Kompression des Ringes (6) ausübt, die auf eine Hauptsymmetrieachse (Y-Y) dieses Ringes (6) gerichtet sind.

7. Werkzeug (9) nach Anspruch 6, wobei:
- das Bohrwerkzeug (10) eine Drehantriebsmaschine (5) zum Drehantrieb der Reibahle (3) umfasst, die auf lösbare Weise über den Drehantriebslängsabschnitt (3c) an der Reibahle (3) montiert ist, um sie entlang der Längssymmetrieachse (Z-Z) der Reibahle (3) drehend anzutreiben, wobei diese Antriebsmaschine (5) von Hand tragbar ist; und
- das Ringextraktionswerkzeug (7) eine Translationsantriebsmaschine (7a) zum Translationsantrieb der Spindel (8) umfasst, die an der Spindel montiert ist, um sie entlang einer Längssymmetrieachse (Z-Z) der Spindel in Translation anzutreiben, wobei diese Translationsantriebsmaschine (7a) von Hand tragbar ist.

8. Werkzeug (9) nach Anspruch 7, wobei:
- was das Bohrwerkzeug (10) betrifft, der Schneidlängsabschnitt (3b) zwischen dem Steuerungslängsabschnitt (3a) und dem Drehantriebslängsabschnitt (3c) der Reibahle (3) angeordnet ist; und
- was das Extraktionswerkzeug (7) betrifft, die Translationsantriebsmaschine (7a) der Spindel (8) einen über seine gesamte Länge hohlen Hydraulikzylinder (7c) umfasst, um den Durchtritt der Spindel (8) durch den Zylinder (7c) zu ermöglichen, wobei die Spindel so die Positionierung des Zylinders (7c) in Bezug auf die Spindel (8) und folglich in Bezug auf die Bohrung (2) gestattet, die den herauszuziehenden Ring (6) enthält und in der sich die Spindel (8) des Extraktionswerkzeugs (7) erstreckt.

9. Werkzeug (9) nach einem der Ansprüche 6 bis 8, wobei der Steuerungslängsabschnitt (3a) zueinander parallele Nuten (11) aufweist, wobei jede dieser Nuten (11) eine Nutseitenfläche (11c) und Nutenden (11a, 11b) aufweist, die von der Reibahle (3) nach außen münden.

10. Werkzeug (9) nach einem der Ansprüche 6 bis 9, wobei der Steuerungslängsabschnitt eine Zentrierlänge aufweist, die mindestens gleich dem Fünffachen des Steuerungsdurchmessers ist.

11. Werkzeug (9) nach einem der Ansprüche 6 bis 10 in Kombination mit Anspruch 7, wobei der Führungslängsabschnitt (8a) der Spindel (8) zwischen dem Anlageabschnitt (8b) und einem Ende (8c) der Spindel angeordnet ist, das mit der Translationsantriebsmaschine (7a) der Spindel verbunden ist, um die Translationsbewegung der Spindel (8) zu erzwingen.

12. Werkzeug nach Anspruch 11, wobei die Translationsantriebsmaschine (7a) der Spindel (8) ein ringförmiges Anlageteil (12) aufweist, das sich um die Spindel (8) herum erstreckt und einen inneren Durchgang (12a) aufweist, der dazu geeignet ist, den Ring (6) aufzunehmen, in dem sich der Führungslängsabschnitt (8b) der Spindel (8) erstreckt.

13. Werkzeug nach einem der Ansprüche 6 bis 12, wobei die Zähne (4) der Reibahle gleichmäßig um die Längssymmetrieachse (X-X) der Reibahle herum verteilt sind, wobei einer dieser Zähne (4a) nicht schneidend ist und gegenüber dem von den anderen Zähnen (4) der Reibahle (3) definierten Schneiddurchmesser (D2) zurückversetzt ist.

14. Werkzeug (9) nach Anspruch 13, wobei die Zähne (4) der Reibahle helixförmig sind.

## Claims

1. A method of restoring a wheel (1) to compliance, the wheel having a plurality of ovalized bores (2), the method being **characterized in that** it includes at least a step of boring a first ovalized bore (2) with the help of a reamer (3) presenting a longitudinal pilot portion (3a) and a longitudinal cutter portion (3b), the cutter portion (3b) presenting teeth (4) defining a cutting diameter (D2), and the pilot portion (3a) presenting a pilot diameter (D1) strictly less than the cutting diameter (D2), the step of boring this first ovalized bore (2) consisting in inserting the reamer (3) into the first ovalized bore (2), beginning with the pilot portion (3a) and followed by the cutter portion (3b), the pilot diameter (D1) being such that it enables the reamer (3) to be guided in translation inside the first ovalized bore (2) for boring.

2. A method of restoring compliance according to claim 1, wherein the reamer (3) extends along a longitudinal axis of symmetry (X-X) of the reamer, and during the boring step, the reamer (3) is assembled to a rotary drive machine (5) arranged to drive the reamer (3) in rotation about said longitudinal axis (X-X) of symmetry of the reamer, the rotary drive machine (5) being manually portable.

3. A method of restoring a wheel to compliance in accordance with claim 1 or claim 2, the method comprising, prior to the step of boring the first ovalized bore (2), a step of extracting a ring (6) engaged in the first ovalized bore (2), this extraction step being performed with the help of an extractor tool (7) comprising a pin (8) presenting a longitudinal guide portion (8a) adapted to slide in the ring (6) and a bearing portion (8b) shaped to be able to come to bear against an axial end (6a) of the ring (6) while the guide portion (8a) is positioned inside the ring (6) and, in reaction to a compression force (F1) of said bearing portion (8b) against said axial end (6a) of the ring, to cause the bearing portion (8b) to exert radial compression forces (F2) on the ring directed towards a main axis of symmetry (Y-Y) of the ring (6).

4. A method according to claim 3, wherein the longitudinal guide portion (8a) is a right cylinder, the bearing portion (8b) presents a frustoconical surface (S1) on the same axis as the longitudinal guide portion (8a), the frustoconical surface (S1) extends around the longitudinal guide portion (8a), the frustoconical surface (S1) being arranged so as to define an annular hollow zone (Z1) between the frustoconical surface (S1) and the longitudinal guide portion (8a) that is surrounded by said frustoconical surface (S1).

5. A method according to any preceding claim, in combination with claim 3 for restoring a wheel to compliance, wherein the ring (6) is in the form of a right cylinder and presents an outside diameter (D3) less than the cutting diameter (D2) defined by the teeth (4) of the reamer, the boring step being performed in such a manner as to bore the first ovalized bore (2) so as to give it a right cylindrical inside shape of diameter equal to the cutting diameter (D2), and then after performing the step of boring the first ovalized bore (2), the method of restoring compliance includes a step of engaging a corresponding replacement ring in each bore (2) that has been bored during the boring step.

6. Tooling (9) for performing the method according to any preceding claim in combination with claim 3, the tooling being **characterized in that** it comprises:
• a boring tool (10) comprising a reamer (3) extending along a longitudinal axis (X-X) of symmetry of the reamer, and presenting in succession a longitudinal pilot portion (3a), a longitudinal cutter portion (3b), and a longitudinal rotary drive portion (3c) of the reamer (3), the cutter portion presenting teeth (4) defining a cutting diameter (D2) and the pilot portion (3a) extending along a right cylindrical surface defining a pilot diameter (D1) that is strictly less than the cutting diameter (D2); and
• an extractor tool (7) for extracting a ring (6) engaged in a bore (2), the extractor tool (7) comprising a pin (8) presenting a longitudinal guide portion (8a) adapted to slide in a right cylindrical ring (6) for extraction, and a bearing portion (8b) shaped so that when the longitudinal guide portion (8a) is positioned inside the ring (6) and the bearing portion (8b) is pressed against an axial end (6a) of the ring (6), then said bearing portion (8b), in reaction to a compression force (F1) of said bearing portion (8b) against said axial end (6a) of the ring (6) exerts radial compression forces (F2) on the ring (6) directed towards a main axis (Y-Y) of symmetry of the ring (6).

7. Tooling (9) according to claim 6, wherein:
• the boring tool (10) presents a rotary drive machine (5) for driving the reamer (3) when releasably assembled to the reamer (3) via its longitudinal rotary drive portion (3c), in order to drive it in rotation about the longitudinal axis (Z-Z) of symmetry of the reamer (3), said rotary drive machine (5) being manually portable; and
• the ring extractor tool (7) includes a drive machine (7a) for driving the pin (8) to move in translation when assembled to the pin in order to drive it in translation along a longitudinal axis (Z-Z) of symmetry of the pin, the machine (7a) for driving movement in translation being manually portable.

8. Tooling (9) according to claim 7, wherein:
• for the boring tool (10), the longitudinal cutter portion (3b) lies between the longitudinal pilot portion (3a) and the longitudinal rotary drive portion (3c) of the reamer (3); and
• for the extractor tool (7), the machine (7a) for driving the pin (8) to move in translation comprises a hydraulic actuator (7c) that is hollow over its entire length in order to pass the pin (8) through the actuator (7c), the pin thus enabling the actuator (7c) to be positioned relative to the pin (8) and consequently relative to the bore (2) containing the ring (6) that is to be extracted, and in which the pin (8) of the extractor tool (7) extends.

9. Tooling (9) according to any one of claims 6 to 8, wherein the longitudinal pilot portion (3a) presents mutually parallel grooves (11), each of the grooves (11) presenting a lateral groove side (11c) and terminal groove ends (11a, 11b) that open out to the outside of the reamer (3).

10. Tooling (9) according to any one of claims 6 to 9, wherein the longitudinal pilot portion presents a centering length that is at least five times the pilot diameter.

11. Tooling (9) according to any one of claims 6 to 10, in combination with claim 7, wherein the longitudinal guide portion (8a) of the pin (8) is arranged between the bearing portion (8b) and an end of the pin (8c) that is connected to the machine (7a) for driving movement of the pin in translation in order to force the pin (8) to move in translation.

12. Tooling according to claim 11, wherein the machine (7a) for driving movement of the pin (8) in translation presents an annular bearing part (12) extending around the pin (8) and presenting an internal passage (12a) adapted to receive the ring (6) in which the longitudinal guide portion (8b) of the pin (8) extends.

13. Tooling according to any one of claims 6 to 12, wherein the teeth (4) of the reamer are regularly distributed around the longitudinal axis (X-X) of symmetry of the reamer, one of the teeth (4a) not being sharp and being set back relative to the cutting diameter (D2) defined by the other teeth (4) of the reamer (3).

14. Tooling (9) according to claim 13, wherein the teeth (4) of the reamer are helical.
